# DEMANDE DE BREVET EUROPEEN

(11) **EP 4 461 892 A1**
(43) Date de publication de la demande: **13.11.2024**
(21) Numéro de dépôt: 24172318.8
(22) Date de dépôt: 25.04.2024
(51) Int. Cl.: E03D 5/016, C02F 9/20

(54) **DISPOSITIF SANITAIRE AUTONOME COMPORTANT AU MOINS UNE OU PLUSIEURS CUVETTES DE TOILETTE**

(30) Priorité: 10.05.2023 FR 2304650
(71) Demandeur: Altempo, 68126 Bennwihr (FR)
(72) Inventeur: RENAUD, Stéphane, 68126 BENNWIHR (FR); BURDLOFF, Pierre, 68126 BENNWIHR (FR)
(74) Mandataire: Cabinet Boettcher

(57) **Abrégé**

Dispositif sanitaire (0), comprenant au moins une cuvette de toilette (1a, 1b) qui comporte une entrée d'alimentation en eau (2a) et une sortie d'effluents (3a, 3b), lesdits effluents contenant de l'eau et des matières organiques.

Le dispositif sanitaire (0) comporte un système de recyclage des effluents (10) :
- pour recevoir lesdits effluents (F0) provenant chaque au moins une cuvette (1a, 1b) ; et
- pour délivrer de l'eau à chaque au moins une cuvette, le système de recyclage (10) traitant le flux d'effluents F0 pour générer un flux d'eau extraite (F2) et un flux de matières organiques (F1), le système de recyclage (10) étant agencé de manière que l'eau délivrée à chaque au moins une cuvette (1a, 1b) soit au moins en partie de l'eau du flux d'eau extraite (F2) desdits effluents (F0).

## Description

La présente invention se rapporte au domaine des dispositifs sanitaires comportant au moins une cuvette de toilette, quelle que soit sa nature (anglaise, turc...).

Par définition un dispositif sanitaire est un dispositif relatif aux installations et appareils destinés aux soins de propreté, d'hygiène et d'assainissement.

Une cuvette de toilette est conçue pour recevoir des déjections d'utilisateurs, une telle cuvette pouvant se présenter sous la forme de siège de WC ou éventuellement d'un d'urinoir, et de toutes formes en fonction des pays (à l'anglaise, à la turc, etc).

Le nettoyage d'une cuvette se fait en projetant de l'eau dans la cuvette ce qui génère des effluents contenant les déjections et l'eau de nettoyage.

Ceci occasionne une forte consommation d'eau et une nécessitée d'évacuation et de traitement des effluents.

Le traitement de ces effluents est d'autant plus complexe que le volume de ces effluents est important et qu'ils sont chargés en matières organiques de différentes natures (matières fécales, bactéries, virus et éventuellement des matières chimiques).

### OBJET DE L'INVENTION

Un objet de la présente invention est de fournir un dispositif sanitaire résolvant ou du moins atténuant certains au moins des problèmes précités de l'art antérieur.

### RESUME DE L'INVENTION

A cet effet, l'invention concerne essentiellement un dispositif sanitaire, comprenant au moins une cuvette de toilette qui comporte une entrée d'alimentation en eau et une sortie d'effluents, lesdits effluents contenant de l'eau et des matières organiques.

Le dispositif sanitaire selon l'invention est essentiellement, caractérisé en ce qu'il comporte un système de recyclage des effluents :
- relié d'une part à la sortie de chaque au moins une cuvette pour recevoir lesdits effluents provenant chaque au moins une cuvette ; et
- relié d'autre part à l'entrée d'alimentation en eau de chaque au moins une cuvette pour délivrer de l'eau à chaque au moins une cuvette, le système de recyclage étant agencé pour traiter les effluents provenant de ladite au moins une cuvette de manière à générer un flux d'eau extraite desdits effluents et un flux de matières organiques extraites des effluents, le système de recyclage comprenant au moins un réservoir de stockage dudit flux de matières organiques et le système de recyclage étant agencé de manière que l'eau délivrée à chaque au moins une cuvette soit au moins en partie de l'eau du flux d'eau extraite desdits effluents.

Ainsi, le système de recyclage permet de générer un flux d'eau extraite des effluents qui proviennent de sortie (s) d'effluents de chaque au moins une cuvette, cette eau étant recyclée vers la/les cuvette(s) du dispositif pour les nettoyer.

Le dispositif sanitaire selon l'invention présente une capacité de fonctionnement en circuit d'eau fermé qui limite le besoin d'évacuation d'effluents sous forme liquide.

Grâce à l'invention, les matières organiques du flux de matières organiques sont stockées dans un réservoir pour pouvoir être évacuées dans un second temps.

Le flux d'eau extraite des effluents est quant à lui au moins partiellement recyclé pour à nouveau être admis vers la cuvette / les cuvettes via l'entrée d'alimentation en eau.

On réalise ainsi une importante économie d'eau puisque la cuvette de toilette est régulièrement nettoyée avec de l'eau prélevée dans l'effluent préalablement évacué de la cuvette.

Pour la compréhension de l'invention, le flux d'eau est majoritairement composé, en masse, par de l'eau alors que le flux de matières organiques extraites des effluents est majoritairement composé, en masse, par de la matière organique humide (par exemple une boue).

### BREVE DESCRIPTION DES DESSINS

D'autres caractéristiques et avantages de l'invention ressortiront clairement de la description qui en est faite ci-après, à titre indicatif et nullement limitatif, en référence à :

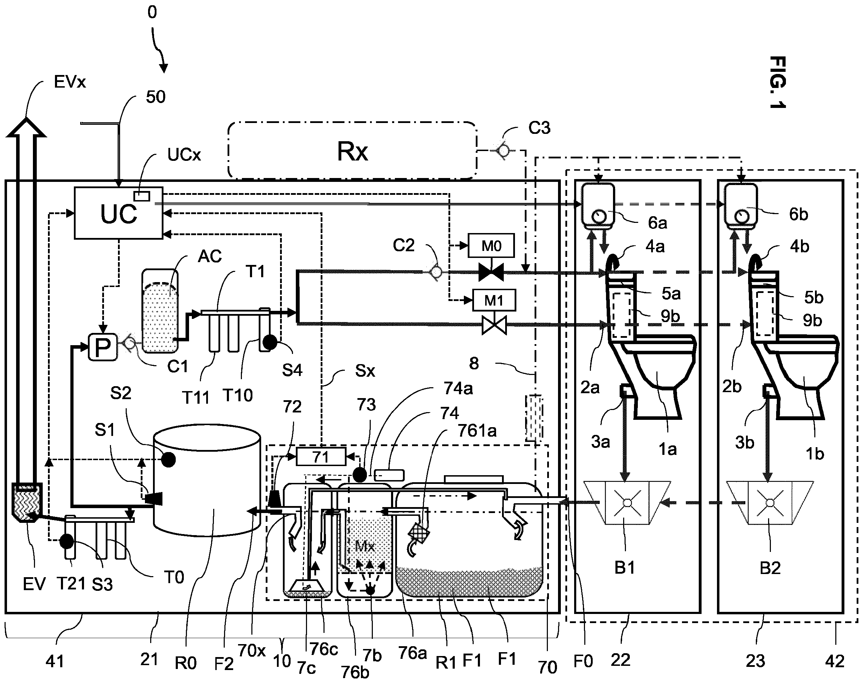

[Fig. 1] la figure 1 qui est un schéma du dispositif sanitaire 0 selon l'invention.

### DESCRIPTION DETAILLEE DE L'INVENTION

En référence à la figure 1, l'invention concerne un dispositif sanitaire 0, comprenant au moins une cuvette de toilette 1a, 1b qui comporte une entrée d'alimentation en eau 2a, 2b et une sortie d'effluents 3a, 3b.

Le nombre de cuvettes est ici de deux, toutefois le dispositif 0 pourrait comporter un plus grand nombre de cuvettes par exemple disposées dans un ou plusieurs conteneurs.

Les effluents contiennent de l'eau et des matières organiques issues de déjections.

Le dispositif sanitaire 0 comporte un système de recyclage des effluents 10 :
- relié d'une part à la sortie 3a, 3b de chaque au moins une cuvette 1a, 1b pour recevoir lesdits effluents F0 provenant chaque au moins une cuvette 1a, 1b ; et
- relié d'autre part à l'entrée d'alimentation en eau 2a de chaque au moins une cuvette 1a, 1b pour délivrer de l'eau à chaque au moins une cuvette.

Chaque cuvette donnée est ici alimentée via une même entrée l'alimentation en eau 2a commune aux différentes cuvettes.

Chaque cuvette est équipée de son propre mécanisme de chasse d'eau auquel est fluidiquement reliée l'entrée d'alimentation en eau 2a alimentant chacune des cuvettes.

Le système de recyclage 10 est agencé pour traiter les effluents F0 provenant de chacune desdites au moins une cuvette 1a, 1b de manière à générer un flux d'eau extraite F2 desdits effluents F0 et un flux de matières organiques F1 extraites des effluents F0.

Le système de recyclage 10 comprend au moins un réservoir de stockage R1 dudit flux de matières organiques F1.

Le système de recyclage 10 est agencé de manière que l'eau délivrée à chaque au moins une cuvette 1a, 1b soit au moins en partie de l'eau du flux d'eau extraite F2 desdits effluents F0.

En d'autres termes, l'eau extraite des effluents F0 provient des effluents transitant par les sorties d'effluents 3a, 3b de chaque au moins une cuvette 1a, 1b et elle est réutilisée pour le nettoyage de ces mêmes cuvettes 1a, 1b.

L'invention permet ainsi de minimiser la quantité d'eau à utiliser pour l'évacuation des déjections et le nettoyage de cuvette.

L'invention minimise ainsi le besoin de rejet d'effluents ou d'eau sous forme liquide.

Comme on le verra ci-après, le dispositif selon l'invention est avantageux puisqu'il peut ne nécessiter qu'une alimentation électrique 50 pour fonctionner tout en restant autonome vis-à-vis de réseaux externes d'alimentation en eau ou de collecte d'effluents (réseau de tout à l'égout).

L'alimentation électrique 50 du dispositif sanitaire peut provenir d'un réseau externe au dispositif 0 ou au contraire provenir d'un générateur électrique intégrée ou non au dispositif sanitaire 0.

Afin de favoriser l'autonomie du dispositif 0 selon l'invention par rapport aux réseaux d'alimentation en eau et réseau de traitement des effluents, le système de recyclage 10 comporte préférentiellement un évaporateur EV agencé pour évacuer, sous forme de vapeur d'eau, de l'eau provenant des effluents F0.

Plus particulièrement, l'évaporateur EV permet de réduire le volume total d'eau circulant dans le dispositif sanitaire 0 selon l'invention pour supprimer le besoin d'évacuation de liquides vers un réseau externe / un drain.

Ainsi, le dispositif selon l'invention est adapté à fonctionner en des lieux ne comportant pas de tout à l'égout ou de zone d'épandage / drainage accessible ou ayant une capacité insuffisante d'évacuation.

L'invention est ainsi particulièrement adaptée pour fonctionner sur des lieux enclavés vis-à-vis des réseaux et / ou des lieux pour lesquels les contraintes environnementales et / ou de terrain, n'autorisent pas de rejets dans le sol.

L'invention constitue une solution de toilettes hygiéniques permettant de recevoir du public ou du personnel et permettant de nombreux avantages (économe en eau, peu impactante sur l'environnement, car ne rejetant que de la vapeur d'eau, rapide et économique à installer sans nécessiter des gros travaux de réseaux).

Le dispositif 0 comporte au moins une cuve de stockage, ici la cuve notée R0 permettant de former un volume tampon d'eau extraite des effluents F0.

L'ajout d'une cuve pour récupérer le trop plein d'eau est également envisageable, cette cuve de trop plein étant vidée régulièrement.

Bien qu'une telle cuve de trop plein puisse constituer une alternative à l'évaporateur EV, il est toutefois préférable de l'utiliser en combinaison avec l'évaporateur EV.

Cette cuve d'eau R0 est couplée en amont de l'évaporateur EV pour l'alimenter, en eau extraite des effluents, soit par l'intermédiaire d'un conduit de trop plein gravitaire, soit par l'intermédiaire d'une pompe d'évacuation de trop plein (dans le cas illustré, l'évaporateur est alimenté de manière gravitaire).

L'évaporateur EV est alimenté électriquement pour permettre la transformation d'eau en vapeur et l'évacuation de la vapeur produite via une cheminée d'évacuation.

L'évaporateur EV comporte préférentiellement une résistance électrique de chauffe agencée pour forcer une évaporation d'eau contenue dans l'évaporateur EV vers la cheminée d'évacuation de vapeur et/ou une ventilation motorisée alimentée électriquement pour forcer l'évacuation de vapeur par exemple vers la cheminée d'évacuation.

Le dispositif 0 peut éventuellement comporter un système de prétraitement T0 reliant fluidiquement un conduit de transport d'effluents à l'évaporateur EV.

Ce système de prétraitement T0 est agencé pour prélever et traiter de l'eau provenant des effluents et l'apporter à l'évaporateur EV de manière que l'eau évacuée sous forme de vapeur par l'évaporateur EV provienne exclusivement d'un flux d'eau prétraité généré par le système de prétraitement T0.

Comme l'eau arrivant à l'évaporateur est un flux d'eau prétraité, on réduit le risque de présence dans les vapeurs émises par l'évaporateur EV, de polluants tels que des aérosols, ou des microorganismes potentiellement pathogènes pour la santé humaine.

Un autre avantage de l'admission d'un flux d'eau prétraité au niveau de l'évaporateur EV est de préserver le fonctionnement de l'évaporateur, ce qui en améliore sa durée d'exploitation.

Le système de prétraitement T0 comporte l'un au moins parmi :
- des moyens de neutralisation du pH de l'eau passant par le système de prétraitement T0 ;
- un générateur d'ultraviolet T21 pour dégrader des bactéries contenue dans l'eau passant par le système de prétraitement T0 (les ultraviolets émis par le générateur d'ultraviolets sont efficaces pour dégrader les virus, algues ou spores de champignons contenus dans l'eau) ;
- un ou plusieurs filtres de seuil de filtration inférieur ou égal à 25um, préférentiellement inférieur à 0,1µm.

Le seuil à 25um est utile pour limiter la turbidité alors que le seuil inférieur à 0,1µm est, en plus, utile pour s'opposer au passage de bactéries via le système de prétraitement T0.

La neutralisation du pH permet de préserver la durée de vie des constituants de l'évaporateur EV et de limiter le risque d'évacuation de vapeurs acides ou basiques.

Par moyens de neutralisation du pH, on entend des moyens permettant de faire tendre le pH de l'eau vers un pH proche de 7.

Ainsi, une eau trop acide est neutralisée en augmentant sont pH et inversement, une eau trop basique est neutralisée en diminuant son pH.

Pour la présente application, on considère qu'une eau est neutralisée dans la mesure où son pH est compris entre 6,5 et 7,5.

L'évaporateur EV est ici doté d'une sortie d'effluents gazeux Evx générés par l'évaporateur EV et contenant ladite vapeur d'eau.

La sortie d'effluents gazeux EVx débouche vers l'atmosphère ambiant du dispositif sanitaire 0.

Cette sortie d'effluents gazeux EVx est préférentiellement équipée d'un filtre à charbon actif.

Le filtre à charbon actif permet de limiter le passage d'odeurs et de produits polluants vers le milieu ambiant.

Dans le mode de réalisation particulier illustré à la figure 1, le dispositif sanitaire 0 comprend des première et deuxième enceintes 21, 22 séparées l'une de l'autre, une partie au moins dudit système de recyclage 10 étant placée dans la première enceinte 21 et ladite au moins une cuvette 1a, nommée première cuvette, étant placée dans la deuxième enceinte 22.

Le système de recyclage et les cuvettes sont ainsi implantables en des lieux éloignés ce qui facilite l'intégration du dispositif dans son environnement.

Préférentiellement, le dispositif sanitaire comprend au moins une troisième enceinte 23 séparée desdites première et deuxième enceintes 21, 22, la deuxième cuvette 1b étant placée dans la troisième enceinte 23.

La deuxième cuvette 1b comporte sa propre entrée d'alimentation en eau 2b (reliée à l'entrée 2a) et sa propre une sortie d'effluents 3b.

Le système de recyclage des effluents 10 est :
- relié à la sortie d'effluents 3b de la deuxième cuvette 1b pour recevoir des effluents provenant de la deuxième cuvette 1b ; et
- relié à l'entrée d'alimentation en eau 2b de ladite deuxième cuvette 1b pour délivrer de l'eau à la deuxième cuvette par l'intermédiaire d'un deuxième mécanisme de chasse d'eau propre à la deuxième cuvette.

Le système de recyclage 10 est également agencé pour traiter les effluents provenant de ladite deuxième cuvette 1b de manière à générer une partie du flux d'eau extraite F2 desdits effluents F0 et une partie du flux de matières organiques extraites F1 des effluents F0 à partir d'effluents provenant de la deuxième cuvette 1b.

Le système de recyclage 10 est agencé de manière que l'eau délivrée à la deuxième cuvette 1b soit au moins en partie de l'eau extraite des effluents provenant de l'une quelconque des sorties d'effluents 3a, 3b des première ou deuxième cuvettes 1a, 1b.

Dans un mode de réalisation particulier, la première enceinte 21 contenant le système de recyclage 10 peut être une pièce située à un niveau bas d'un bâtiment alors que la deuxième enceinte 22 et la troisième enceinte 23 peuvent être d'autres pièces du bâtiment situées à des étages supérieurs du bâtiment, la pompe P, qui sera décrite ci-après permettant d'alimenter les cuvettes 1a, 1b du dispositif 0 se trouvant aux étages supérieurs du bâtiment.

Ainsi, l'invention peut concerner un bâtiment équipé du dispositif sanitaire selon l'invention, les cuvettes étant implantées à différents étages du bâtiment, ce bâtiment pouvant être un bâtiment à usage collectif.

La consommation en eau et les rejets d'un tel bâtiment sont ainsi drastiquement réduits.

Le dispositif sanitaire selon l'invention peut être installé de manière provisoire ou définitive à l'intérieur ou à proximité d'un bâtiment.

Il est aussi possible de faire en sorte que les différentes enceintes soient intégrées en différents emplacements d'un lieu de passage du public (par exemple des quais de gare, quais de station, bus, tramway) pour ainsi se conformer aux spécificités du lieu.

Dans l'exemple illustré à la figure 1, la première enceinte 21 est une pièce d'un premier conteneur distinct d'un deuxième conteneur.

Le premier conteneur 41 comporte une toiture et des murs et la première enceinte 21 est équipée d'une porte d'accès à la première enceinte.

Par mur, on entend (indépendamment des matériaux dont il est constitué), une paroi sensiblement verticale qui délimite latéralement l'espace intérieur du conteneur vis-à-vis de l'espace extérieur.

Les deuxième et troisième enceintes 22, 23 sont des pièces distinctes dudit deuxième conteneur 42.

Ce deuxième conteneur 42 est également doté d'une toiture et de murs.

La deuxième enceinte 22 est équipée d'une porte d'accès à la deuxième enceinte 22, de même la troisième enceinte 23 est équipée d'une porte d'accès à la troisième enceinte 23.

Ainsi, le système de recyclage 10 est disposé dans le premier conteneur 41 et les cuvettes de toilettes sont dans des pièces (deuxième et troisième enceintes 22, 23) du second conteneur 42 qui est déporté du premier conteneur 41.

Les conteneurs peuvent être implantés en différents lieux ce qui facilite l'intégration du dispositif dans son environnement.

Les liaisons entre les cuvettes et le système de recyclage 10 pour l'alimentation en eau et la sortie des effluents, se font préférentiellement via des conduites de liaison (souples ou rigides).

Dans le cas présent, ces conduites de liaison s'étendent principalement entre les premier et second conteneurs.

Comme on le verra par la suite, le dispositif comporte préférentiellement :
- une pompe P pour forcer l'alimentation en eau du système de recyclage 10 vers la ou les cuvettes ; et

- une ou plusieurs pompes de broyage B1, B2 permettant de forcer le déplacement des effluents de la ou des cuvettes vers le système de recyclage 10.

Ainsi les conduites de liaison entre les cuvettes et le système de recyclage peuvent cheminer à différentes hauteurs ce qui permet de suivre des chemins adaptés au lieu d'implantation du dispositif sanitaire (par exemple des cheminements au sol et/ou en aérien et/ou en souterrain).

Les conduites de liaison peuvent par exemple cheminer dans des buses, des sous-planchers, des faux-plafonds.

Préférentiellement, chaque premier ou deuxième conteneur donné 41, 42 comporte un châssis qui lui est propre et qui comporte des zones d'attache d'élingues agencées pour pouvoir supporter et déplacer ledit conteneur donné à l'aide d'élingues attachées à ses zones d'attache d'élingues.

Ainsi, le dispositif sanitaire 0 selon l'invention est préférentiellement un dispositif transportable / mobile car agencé dans un ou plusieurs containers pouvant être déplacé(s) à l'aide d'élingues ou être démontable / remontable sur le lieu d'installation si l'élingage est impossible.

Un tel dispositif sanitaire 0 peut être installé de manière éphémère, par exemple sur un chantier, un lieu éphémère d'accueil du public ou de personnel, sur un moyen de transport (par exemple pour suivre le déplacement de hautes personnalités), pour créer des sanitaires autonomes de tout réseau d'alimentation en eau et d'évacuation d'effluents.

Seule une alimentation en énergie 50, typiquement de l'énergie électrique, doit être apportée pour alimenter le système de recyclage 10 et permettre son fonctionnement.

L'eau nécessaire au fonctionnement du dispositif peut être apportée dans une ou plusieurs réserves d'eau Rx, ou cuve R0 du dispositif 0 qui est/sont alimentée(s) lors de la mise en fonctionnement ou lors de la maintenance du dispositif 0.

Le recyclage de l'eau permet un fonctionnement en quasi autonomie en eau sur une longue période.

Il est à noter qu'une partie de l'eau apportée peut provenir d'un éventuel apport en eau potable via le ou les robinets 4a, 4b.

Préférentiellement, le premier robinet 4a du dispositif est placé au-dessus d'un premier lavabo 5a de sorte que de l'eau délivrée par le premier robinet 4a soit collectée par le premier lavabo 5a et soit mélangée aux effluents collectés par ladite au moins une cuvette 1a.

Le dispositif sanitaire 0 comporte aussi un deuxième robinet 4b préférentiellement placé au-dessus d'un deuxième lavabo 5b de sorte que de l'eau délivrée par le deuxième robinet 4b soit collectée par le deuxième lavabo 5b et soit mélangée aux effluents collectés par ladite deuxième cuvette 1b.

Comme indiqué précédemment, pour répondre à des législations imposant que l'eau destinée à entrer en contact avec un utilisateur soit de l'eau potable issue d'un réseau public d'eau potable ou d'un château d'eau alimenté par un tel réseau public, il est possible de faire en sorte que le dispositif sanitaire 0 comporte une réserve d'eau indépendante du système de recyclage 10, cette réserve indépendante Rx étant reliée, via au moins une conduite, au premier robinet 4a et éventuellement au deuxième robinet 4b de sorte que l'eau apportée au premier robinet 4a et/ou au second robinet 4b, soit passée par la réserve d'eau indépendante Rx sans jamais passer par le système de recyclage 10.

Ainsi, la réserve d'eau indépendante Rx du système de recyclage 10 est une forme de château d'eau occasionnellement alimentée en eau potable.

L'eau potable passant par le premier robinet 4a est collectée et mélangée aux effluents pour être traitée et recyclée par le système de recyclage 10.

Une telle législation sur l'eau n'est pas applicable à l'eau destinée au nettoyage de la cuvette.

La réserve indépendante Rx peut être disposée pour alimenter un seul robinet ou plusieurs robinets 4a, 4b.

Dans ce cas, la réserve indépendante peut être portée par le premier conteneur 41 ou par le deuxième conteneur 42.

On pourrait aussi avoir plusieurs réserves indépendantes Rx, ces réserves pouvant être réparties sur une partie seulement des conteneurs.

Préférentiellement, chaque conteneur contenant une cuvette porte sa propre réserve indépendante Rx.

L'apport régulier et en quantité limitée d'eau potable issue de réserve Rx permet de limiter le besoin de maintenance du système de recyclage 10.

Pour éviter un risque de contamination de l'eau contenue dans la réserve d'eau indépendante Rx, un troisième clapet antiretour C3 est disposé sur une canalisation de sortie de la réserve d'eau indépendante Rx, ce clapet C3 étant agencé pour :
- autoriser le passage d'eau, via la canalisation de sortie, de la réserve indépendante Rx vers le premier robinet 4a ; et
- interdire tout passage d'eau au travers du clapet C3 vers la réserve d'eau indépendante Rx.

Il est également envisageable que chaque canalisation de sortie d'eau de réserve Rx soit équipée d'un système de traitement comportant des filtres et/ou un générateur d'ultraviolets et/ou un doseur automatique en chlore ou tout autre dispositif permettant de garantir une potabilité de l'eau sortie de la réserve Rx.

Dans le mode de réalisation où le premier robinet 4a et, le cas échéant, le second robinet 4b, est alimenté en eau recyclée par le système de recyclage 10, une première électrovanne M0 normalement fermée est préférentiellement disposée entre le système de recyclage 10 et le premier robinet 4a, pour sélectivement autoriser le passage d'eau du système de recyclage 10 vers le premier robinet 4a. Cette première électrovanne M0 est ici disposée pour sélectivement autoriser le passage d'eau du système de recyclage 10 vers chacun des robinets 4a, 4b.

En cas de disfonctionnement du système de recyclage 10, le risque de fournir de l'eau non conforme au robinet 4a, 4b est largement minimisé par le choix d'une électrovanne M0 normalement fermée plutôt qu'une électrovanne normalement ouverte.

En effet, en cas de disfonctionnement du système de recyclage, l'électrovanne M0 normalement fermée reste fermée tant qu'elle ne reçoit pas un signal de commande et l'eau potentiellement non conforme n'est pas délivrée au robinet 4a.

Un second clapet antiretour C2 est préférentiellement disposé entre le système de recyclage 10 et le ou lesdits robinet 4a, 4b pour sélectivement autoriser le passage d'eau du système de recyclage vers le /les robinets et s'opposer à tout passage d'eau du / des robinets 4a, 4b vers le système de recyclage 10 via la première électrovanne M0.

Ce second clapet C2 est ici placé entre l'électrovanne M0 et le système de recyclage mais il pourrait être placé entre l'électrovanne M0 et le / les robinets 4a, 4b.

Chaque conduit donné d'alimentation en eau recyclée connecté au système de recyclage 10 pour en recevoir de l'eau recyclée et la distribuer vers un point de consommation comme l'un au moins parmi le ou lesdits robinets, la ou lesdites cuvettes, le ou lesdits chauffe-eau pourrait aussi être équipé de son propre clapet(s) antiretour :
- autorisant le passage d'eau vers le point de consommation via le conduit donné d'alimentation ; et
- interdisant le passage d'eau du point de consommation vers le système de recyclage 10 via le conduit donné d'alimentation.

Ainsi, en cas de rupture d'une canalisation située entre deux points de consommation, le clapet anti-retour placé sur la canalisation limite le risque de vidange complète du point de consommation aval.

Le risque d'avoir une inondation occasionnée par le dispositif sanitaire 0 est ainsi minimisé.

Un tel clapet anti-retour pourrait aussi être combiné à un clapet antifuite interdisant le passage d'eau du système de recyclage vers le point de consommation dès qu'un débit d'eau passant au travers du clapet antifuite est supérieur à un débit maximum autorisé, le clapet antifuite restant alors bloqué en position de fermeture tant qu'un équilibrage de pression n'est pas réalisé entre les parties amont et aval du clapet antifuite.

Un tel clapet antifuite permet de couper l'arrivée d'eau vers un point de consommation qui présenterait une fuite trop importante et il maintient cette coupure tant que la fuite n'est pas traitée.

Un autre clapet antiretour pourrait aussi être placé entre l'entrée d'alimentation en eau 2a, 2b de chaque au moins une cuvette 1a, 1b :
- pour autoriser le passage d'eau du système de recyclage vers l'entrée d'alimentation en eau de chaque au moins une cuvette 1a, 1b ; et
- pour interdire tout passage d'eau de l'entrée d'alimentation en eau 2a, 2b de chaque au moins une cuvette 1a, 1b vers le système de recyclage 10 via la seconde électrovanne M1.

Comme on le comprend sur l'exemple de la figure 1, la première électrovanne M0 autorise le passage d'eau vers le premier robinet 4a (en l'occurrence vers chacun desdits robinets 4a, 4b) en réponse à un signal de commande d'ouverture généré par un module de commande (UC).

Ici le module de commande UC est constitué par l'unité de commande UC.

Le module de commande UC est relié à une sonde de mesure de turbidité S1 de l'eau du flux d'eau extraite F2 desdits effluents F0.

Le module de commande UC est agencé pour interdire la génération dudit signal de commande d'ouverture à l'attention de la première électrovanne M0 lorsque la mesure de turbidité est représentative d'un niveau de turbidité de l'eau supérieur à un premier seuil prédéterminé de turbidité.

Le module de commande UC est également agencé pour interdire la génération dudit signal de commande d'ouverture à l'attention de la seconde électrovanne M1 lorsque la mesure de turbidité est représentative d'un niveau de turbidité de l'eau supérieur à un second seuil prédéterminé de turbidité supérieur ou égale audit premier seuil prédéterminé de turbidité.

Ainsi, la qualité de l'eau admissible vers la, les cuvettes peut être inférieure à la qualité admissible vers le / les robinet 4a, 4b.

Lorsque l'eau du flux d'eau F2 est considérée comme trop turbide, c'est-à-dire avec une turbidité supérieure audit seuil prédéterminé de turbidité, la première électrovanne M0 ne reçoit alors aucun signal et reste en position fermée pour interdire l'alimentation en eau du robinet 4a et plus particulièrement de chacun des robinets 4a, 4b.

Le module de commande UC est aussi relié à une sonde de niveau S2, ici implantée au niveau d'une quatrième cuve R0 recevant ledit flux d'eau extraite F2 desdits effluents, cette cuve R0 est dite cuve tampon.

Le module de commande UC est agencé pour interdire la génération dudit signal de commande d'ouverture à l'attention de la première électrovanne M0 (et éventuellement à l'attention de la seconde électrovanne M1) lorsque la mesure de niveau réalisée par la sonde de niveau S2 est représentative d'un niveau d'eau dans la cuve R0 inférieur à un seuil bas prédéterminé.

Bien entendu, le module de commande pourrait aussi être relié à une ou plusieurs sondes S3, S4 de détection de bon fonctionnement d'un ou plusieurs générateurs d'ultraviolets T21, T10 du système de recyclage 10.

Dans ce cas, le module de commande UC est agencé pour interdire la génération :
- dudit signal de commande d'ouverture à l'attention de la première électrovanne M0 et/ou
- dudit signal de commande d'ouverture à l'attention de la seconde électrovanne M1 ; lorsqu'une mesure réalisée avec l'une au moins des sondes de S3, S4 indique un disfonctionnement de générateur d'ultraviolets T21, T10 (un générateur d'ultraviolets permet une désinfection de l'eau).

Comme illustré sur la figure 1, le dispositif sanitaire 0 peut aussi comporter au moins un chauffe-eau 6a disposé pour chauffer l'eau apportée au premier robinet 4a.

Ledit au moins un chauffe-eau 6a est agencé pour chauffer l'eau à partir de l'une au moins des énergies thermiques comprises parmi une énergie thermique générée par une résistance électrique de chauffe, une énergie thermique générée par une combustion de gaz inflammable comme du méthane, du butane ou du propane, une énergie thermique générée par un capteur solaire à fluide caloporteur.

La résistance de chauffe induisant ladite énergie thermique peut être alimentée électriquement par un panneau photovoltaïque appartenant au dispositif sanitaire et/ou par un groupe électrogène et/ou par un réseau électrique 50 externe au dispositif sanitaire 0.

Par énergie thermique générée, il faut entendre que l'énergie thermique est générée au niveau du dispositif sanitaire selon l'invention.

Pour améliorer le fonctionnement bactériologique du système de recyclage 10, le dispositif sanitaire 0 peut comporter un dispositif de chauffage des effluents F0.

Une partie au moins de ce dispositif de chauffage se trouve par exemple en amont de la station de traitement 70 pour préchauffer les effluents F0 avant qu'ils n'arrivent dans la station 70 ou dans la station de traitement 70, par exemple dans la cuve 76a.

Ce dispositif de chauffage d'effluents peut être agencé pour utiliser des calories issues de l'évaporateur EV (par exemple en réalisant un échange thermique avec des fluides passant via la cheminée d'évacuation de vapeur) et/ou d'un bruleur de méthane (utilisant par exemple du méthane issu de la station de traitement 70) et/ou d'un échangeur thermique couplé à un moteur (comme le moteur du compresseur 74) et/ou d'une résistance électrique de chauffe alimentée par l'alimentation électrique 50.

Comme illustré sur la figure 1, ladite entrée d'alimentation en eau 2a de ladite au moins une cuvette 1a, qui est ici une entrée d'alimentation en eau commune à chacune des cuvettes 1a, 1b du dispositif 0, est reliée au système de recyclage 10 par l'intermédiaire de la seconde électrovanne M1 (normalement ouverte ou normalement fermée).

L'usage d'une vanne M0 ou M1 de type normalement fermée est avantageux pour interdire l'alimentation en eau en cas de coupure de l'alimentation en électricité. On évite ainsi le risque d'avoir une alimentation en eau alors que les broyeurs B1, B2 ou la station de traitement ne sont plus alimentés électriquement.

Cette seconde électrovanne M1 est agencée pour sélectivement autoriser le passage d'eau du système de recyclage 10 vers l'entrée d'alimentation en eau 2a de ladite au moins une cuvette 1a (en l'occurrence de l'entrée d'alimentation en eau 2a de chacune desdites cuvettes 2a, 2b) .

Le fait d'utiliser une électrovanne M0 pour contrôler l'admission d'eau vers les robinets et une autre électrovanne pour contrôler l'admission d'eau vers les cuvettes permet d'avoir la possibilité de commander ces admissions de manière différentiée.

Ceci est par exemple avantageux puisque l'on peut fixer des conditions d'interdiction d'admission d'eau vers les cuvettes moins strictes que les conditions d'interdiction d'admission d'eau vers les robinets.

Nous allons maintenant décrire le système de recyclage 10 présenté dans l'exemple de la figure 1.

Ce système de recyclage 10 comporte :
- un module de sécurité UCx ;
- une station de traitement des effluents 70 équipée d'un appareillage de mesure 71 de paramètres de fonctionnement de la station de traitement 70, lesdits paramètres de fonctionnement évoluant lors du fonctionnement de la station de traitement 70, l'appareillage de mesure 71 comportant au moins une sonde 72, 73 choisie dans le groupe de sondes comprenant une sonde de mesure de pression 73, une sonde de mesure de température, une sonde de mesure de consommation électrique, une sonde de niveau d'effluent ou d'eau, une sonde de pH, une sonde de turbidité 72, une sonde de mesure de température, une sonde de mesure de conductivité, une sonde de mesure d'intensité électrique, une sonde de mesure de tension électrique, une sonde de bon fonctionnement d'un générateur d'ultraviolets, une sonde de mesure de débit, une sonde optique adaptée pour mesurer le bon fonctionnement générateur d'ultraviolets, une sonde de mesure de présence de méthane et/ou de monoxyde de carbone, une sonde de détection de fumée.

L'appareillage de mesure 71 est agencé pour générer au moins un signal d'état Sx de fonctionnement de la station 70.

Le module de sécurité Ucx est agencé pour sélectivement commander ou interdire l'alimentation en eau de l'entrée d'alimentation en eau 2a de chaque au moins une cuvette 1a, 1b en fonction du signal d'état Sx de fonctionnement de la station 70 et/ou d'un signal d'état de sondes du dispositif sanitaire.

Pour cela, le module de sécurité Ucx peut par exemple commander l'électrovanne M1.

L'appareillage de mesure 71 peut aussi permettre de gérer de la station de traitement 71.

Par exemple, l'appareillage de mesure 71 équipant la station de traitement 70 peut, à l'aide de ses sondes (ici, une sonde de turbidité 72 et une sonde de pression d'air comprimé 73 qui réalisent des mesures au niveau de la station 70) :
- détecter un disfonctionnement interne à la station 70 ; et
- alerter le module de sécurité Ucx du dispositif sanitaire 0 pour qu'il puisse sélectivement autoriser ou interdire l'alimentation en eau des cuvettes 1a, 1b et générer une alarme en cas de détection de dysfonctionnement de la station 70.

Par exemple, la détection d'un niveau bas et/ou d'un niveau haut d'effluent F0, de matières organiques (flux F1) ou d'eau traitée (flux F2) dans la station de traitement 70 peut alerter sur une fuite ou un colmatage ou un trop plein dans la station 70.

A nouveau, l'arrêt de l'alimentation en eau des cuvettes permet une mise en sécurité du dispositif selon l'invention.

Dans les cas, comme celui illustré à la figure 1, où la station de traitement 70 comporte un compresseur 74 actionné par un moteur électrique (pour apporter de l'air sous pression dans les cuves de la station 70 pour y réaliser une oxygénation et/ou une recirculation de dépôts vers la première cuve 76a), la sonde de l'appareillage 71 peut mesurer un paramètre de fonctionnement du compresseur 74 tel que la pression d'air et/ou la consommation électrique du moteur et/ou la température du compresseur pour détecter un éventuel dysfonctionnement du compresseur 74.

Le signal d'état Sx de fonctionnement de la station de traitement 70 est alors représentatif d'un fonctionnement correct de la station et/ou d'un dysfonctionnement de la station.

Ce signal Sx est une information simple à prendre en compte par le module de sécurité Ucx du dispositif sanitaire 0 selon l'invention.

Ainsi, le dispositif sanitaire 0 est compatible avec une multitude de types de stations de traitement 70 ayant chacune son propre type d'appareillage de mesure 71 de paramètres de fonctionnement de la station de traitement, les types de stations 70 et types d'appareillage 71 variant d'un constructeur à l'autre.

Le module de sécurité Ucx est quant à lui dédié au dispositif sanitaire 0 selon l'invention et il est ainsi capable d'en commander le fonctionnement indépendamment du type de station de traitement 70 utilisé.

Ce mode de réalisation est donc favorable à une meilleure modularité de conception / fonctionnement du dispositif sanitaire 0 qui peut être simplement adapté en fonction des particularités du site auquel il est destiné.

L'appareillage de mesure 71 de paramètres de la station de traitement 70 comporte préférentiellement un transmetteur de données vers un réseau filaire et/ou radio (par exemple un transmetteur de téléphonie mobile GSM).

Le signal d'état de fonctionnement Sx de la station est préférentiellement émis via le transmetteur de données ce qui permet de générer une alarme à l'attention d'un service de maintenance distant recevant le signal d'état.

Le temps d'intervention d'une équipe de maintenance peut ainsi être minimisé.

Dans le cas présent, le module de sécurité UCx du dispositif sanitaire selon l'invention est équipé d'un récepteur agencé pour recevoir ledit signal d'état Sx de fonctionnement de la station 70.

Préférentiellement, l'émetteur de l'appareillage de mesure 71 de paramètres de la station 70 est relié au récepteur du module de sécurité UCx par une liaison filaire, cet émetteur comportant également une carte réseau et/ou une antenne pour transmettre ledit signal d'état vers un serveur distant de surveillance.

Le serveur distant de surveillance permet de recevoir des signaux d'état Sx émis par différents dispositifs sanitaires conformes à l'invention qui sont répartis en différents sites distants.

Chaque signal Sx est signé de manière unique de manière à identifier le dispositif sanitaire ayant émis le signa Sx.

Dans le mode particulier illustré à la figure 1, la station de traitement des effluents 70, qu'elle soit ou non équipée dudit appareillage de mesure 71, comporte :
- une première cuve 76a, dite cuve de décantation, reliée fluidiquement à la sortie 3a, 3b de chaque au moins une cuvette 1a, 1b pour recevoir les effluents F0 provenant de chaque au moins une cuvette 1a, 1b (la première cuve 76a constitue ici ledit réservoir de stockage R1 où est stocké ledit flux F1 de matière organiques F1) ;
- une deuxième cuve 76b reliée à la première cuve 76a par l'intermédiaire d'une première conduite de la station 70 disposée à une hauteur de trop plein de la première cuve 76a.

La première conduite autorise le passage de liquide de la première cuve 76a vers la deuxième cuve 76b lorsque le niveau de liquide dans la première cuve 76a atteint ladite hauteur de trop plein. Cette première conduite est ici équipée d'un préfiltre 76a1 disposé dans la première cuve 76a pour s'opposer au passage, vers la deuxième cuve 76b, d'éléments solides de calibre par supérieur à un seuil prédéfini, par exemple supérieur à 1 mm.

La station de traitement des effluents 70, comporte également une troisième cuve 76c, dite cuve de clarification, reliée à la deuxième cuve 76b par l'intermédiaire d'une deuxième conduite de la station disposée à une hauteur de trop plein de la deuxième cuve 76b.

La deuxième conduite autorise le passage de liquide de la deuxième cuve 76b vers la troisième cuve 76c lorsque le niveau de liquide dans la deuxième cuve 76b atteint ladite hauteur de trop plein de la deuxième cuve 76b.

Une conduite d'évacuation de la station 70x s'étend entre la troisième cuve 76c et une quatrième cuve R0, dite cuve tampon.

La conduite d'évacuation 70x est disposée à une hauteur de trop plein de la troisième cuve 76c pour collecter ledit flux d'eau F2 dans la troisième cuve 76c et le transporter vers la quatrième cuve R0.

La deuxième cuve 76b de la station 70 contient un média filtrant Mx éventuellement placé sur une grille.

Un bulleur 7b débouche dans la deuxième cuve 76b, préférentiellement sous la grille, pour y distribuer de l'air, oxygéner le média filtrant Mx et les microorganismes présents dans le média filtrant Mx et ainsi accélérer la dégradation aérobie de la matière organique présente dans la deuxième cuve 76b.

Cette deuxième cuve 76b forme un réacteur biologique de dégradation de la matière organique.

La troisième cuve 76c contient un collecteur de dépôt 7c alimenté éventuellement, via une conduite d'air comprimé généré par le compresseur 74 ou par une pompe de relevage.

Le collecteur de dépôt 7c est agencé pour collecter des dépôts présents au fond de la troisième cuve 76c et les transporter vers la première cuve 76a par l'intermédiaire d'une conduite du collecteur de dépôt sous l'effet de l'air comprimé généré par le compresseur 74 ou la pompe de relevage.

Le collecteur de dépôt 7c comporte une cloche ouverte vers le fond de la troisième cuve 76c, une première extrémité de la conduite du collecteur de dépôt 7c débouchant à l'intérieur de la cloche alors que la seconde extrémité de la conduite du collecteur de dépôt débouche dans la première cuve 76a.

Une extrémité de la conduite d'air comprimé 74a débouche dans la cloche de telle manière que l'air comprimé arrivant dans la cloche s'élève dans la cloche et passe par la conduite du collecteur de dépôt 7c pour revenir vers la première cuve 76a.

La pompe de relevage peut aussi être couplée au collecteur de dépôt en forme de cloche et à la conduite 7c pour générer un flux allant de la troisième cuve 76c vers la première cuve 76a.

Le flux d'air comprimé ou le flux généré par la pompe de relevage allant de la troisième cuve 76c vers la première cuve 76a via la conduite du collecteur 7c permet de transporter des dépôts présents dans troisième cuve 76c vers la première cuve 76a.

De cette manière, les effluents circulant de la première cuve 76a vers la troisième cuve 76c sont progressivement débarrassés de la matière organique qu'ils contiennent et sont dès lors progressivement clarifiés.

Le système de recyclage 10 traite ainsi les effluents provenant de la cuvette 1a ou des cuvettes 1a, 1b pour générer un flux d'eau F2 sortant de station de traitement des effluents 70 et un flux de matière organique F1 s'accumulant essentiellement dans la première cuve 76a de la station de traitement.

Cette première cuve 76a constitue le réservoir de stockage R1 de matières organiques.

La quatrième cuve R0, dite cuve tampon, permet aux éventuelles particules contenues dans l'eau du flux d'eau extraite de se décanter.

Cette quatrième cuve R0 forme une réserve d'eau traitée par le système de recyclage.

De manière optionnelle, le dispositif selon l'invention pourrait comporter :
- une conduite de collecte de méthane 8 généré dans l'une au moins desdites cuves de la station de traitement 70 ; et
- un équipement de chauffe 6a agencé pour générer de la chaleur à partir dudit méthane collecté via la conduite de collecte.

Le méthane collecté est généré sous l'effet d'une méthanisation de matières organiques contenues dans les effluents et/ou dans le flux de matières organiques.

Un exemple d'équipement de chauffe peut être un bruleur appartenant au chauffe-eau 6a ou une pile à combustible fonctionnant au méthane et générant de l'électricité alimentant un chauffage (par exemple une résistance électrique).

La chaleur produite par l'équipement de chauffe est par exemple utilisée pour chauffer l'eau alimentant le premier robinet 4a et/ou le second robinet 4b et/ou pour chauffer une partie du dispositif sanitaire comme le premier conteneur 41 où se trouve la station de traitement 70 et/ou le second conteneur 42 où se trouve ladite au moins une cuvette 1a et/ou le chauffe-eau 6a chauffant l'eau alimentant le premier robinet 4a. Cette source de chaleur peut éventuellement être utilisée pour favoriser l'évaporation au niveau de l'évaporateur EV.

Préférentiellement, le système de recyclage 10 comporte une pompe de circulation P adaptée à forcer une circulation d'eau du flux d'eau extraite F2 desdits effluents vers l'entrée d'alimentation en eau 2a de chaque au moins une cuvette 1a, 1b.

La pompe de circulation P est reliée à un accumulateur de pression AC disposé en aval de la pompe de circulation P pour constituer une réserve d'eau sous pression disposée entre la pompe P et l'entrée d'alimentation en eau 2a de chaque au moins une cuvette 1a, 1b.

Plus précisément, cette accumulateur de pression AC est un réservoir à vessie ayant deux volumes internes au réservoir séparés l'un de l'autre par une vessie mobile de manière que la déformation / le déplacement de la vessie dans le réservoir AC selon une première direction de déformation / déplacement entraîne l'augmentation de l'un de ces volumes internes et une diminution de l'autre de ces volumes internes et inversement en cas de déformation / déplacement de la vessie selon une seconde direction de déformation / déplacement opposée à la première direction.

Un premier clapet antiretour C1 est disposé entre la pompe de circulation P et l'accumulateur de pression AC pour autoriser le passage d'eau de la pompe P vers l'accumulateur de pression AC et interdire le passage d'eau de l'accumulateur de pression AC vers la pompe de circulation P.

Ce mode de réalisation permet d'avoir une réserve d'eau sous pression y compris lorsque la pompe P est à l'arrêt, limitant ainsi le besoin d'actionnement de la pompe P.

Le système de recyclage 10 comporte aussi un système de posttraitement T1 disposé pour traiter le flux d'eau extraite F2 desdits effluents F0 et circulant vers l'entrée d'alimentation en eau 2a de chaque au moins une cuvette 1a, 1b.

Ce système de posttraitement T1 comporte l'un au moins parmi :
- des moyens de neutralisation du pH de l'eau passant par le système de posttraitement T1 ;
- un générateur d'ultraviolet T10 pour dégrader des bactéries contenue dans l'eau passant par le système de posttraitement T1 ;
- un ou plusieurs filtres T11 de seuil de filtration inférieur ou égal à 25um, préférentiellement inférieur à 0,1µm ;
- un ou plusieurs filtres à charbon actif ;
- un doseur volumétrique de chlore pour diluer du chlore dans l'eau passant par le système de posttraitement T1 avec une concentration de chlore contrôlée entre des seuils minimum et maximum de concentration prédéterminés.

Les ultraviolets émis par le générateur d'ultraviolets T10, T21 sont également efficaces pour dégrader les virus, algues ou spores de champignons contenus dans l'eau passant par le système de posttraitement T1.

Le seuil de filtration du filtre T11, à 25um est utile pour limiter la turbidité de l'eau alors que le seuil inférieur à 0,1µm est en plus utile pour s'opposer au passage de bactéries via le système de posttraitement T1 vers chaque au moins une cuvette et/ou vers le ou les robinets 4a, 4b.

Plus particulièrement, le système de posttraitement T1 est ici disposé entre la pompe de circulation P et l'entrée d'alimentation en eau 2a de chaque au moins une cuvette 1a, 1b.

Le deuxième clapet antiretour C2 est ici disposé entre la première électrovanne M0 et le système de posttraitement T1 pour :
- autoriser le passage d'eau du système de posttraitement T1 vers la première électrovanne M0 pour pouvoir alimenter le premier robinet 4a ; et pour
- interdire le passage d'eau de la première électrovanne M0 vers le système de posttraitement T1.

Une pompe de broyage B1 est agencée pour forcer le déplacement des effluents F0 provenant de ladite au moins une cuvette 1a vers le système de recyclage et pour broyer des éventuels agglomérats de matière organique contenus dans les effluents passant par la pompe de broyage B1.

Préférentiellement, comme illustré sur la figure 1, chaque cuvette est reliée à sa propre pompe de broyage B1 pour la première cuvette 1a et B2 pour la seconde cuvette 1b.

Il serait aussi envisageable d'avoir une pompe de broyage commune à une pluralité des cuvettes et par laquelle passeraient les effluents collectés par cette pluralité de cuvettes.

Chaque cuvette donnée est ici équipée de son propre mécanisme de chasse d'eau à commande manuelle 9a, 9b interposée entre l'entrée d'alimentation en eau 2a de chaque au moins une cuvette donnée pour sélectivement autoriser, à la demande d'un utilisateur, l'arrivée d'eau dans la cuvette donnée.

Un mécanisme de chasse d'eau 9a, 9b peut comporter :
- une cuve d'accumulation d'eau ; et
- un obturateur sélectivement mobile sous l'effet de la commande manuelle entre une position d'obturation et position de chasse.

En position d'obturation, l'obturateur s'oppose au passage d'eau du réservoir vers l'intérieur de la cuvette donnée.

En position de chasse, l'obturateur autorise le déversement vers l'intérieur de la cuvette donnée d'une quantité d'eau préalablement accumulée dans la cuve d'accumulation.

Il est à noter que la cuve d'accumulation du mécanisme de chasse d'eau peut être une cuve à pression atmosphérique ou une cuve en surpression par rapport à la pression atmosphérique, dans ce dernier cas la cuve d'accumulation peut être du type réservoir à vessie.

Un principal avantage du dispositif sanitaire selon l'invention est qu'il est ici uniquement alimenté en électricité provenant d'un réseau externe ou de sources énergies alternatives appartenant au dispositif 0, et qu'il ne génère aucun autre rejet que la vapeur d'eau et des boues humides ou sèches (dans le cas où le flux de matière organique F1 serait transféré vers un équipement de séchage.

Un exemple d'équipement de séchage pourrait être une presse mécanique, un panier d'égouttage ou autre évaporateur.

L'alimentation électrique 50 est ici utilisée pour alimenter certains au moins des constituants précités du dispositif sanitaire 0 comme :
- le système de recyclage des effluents 10 ;
- l'évaporateur EV (c'est-à-dire possiblement sa ventilation motorisée électriquement et / ou sa résistance électrique de chauffe) ;
- les pompes comme la pompe P, les pompes de broyage B1, B2 ;
- les électrovannes M0, M1 ;
- le module de commande UC ;
- le module de sécurité UCx ;
- la ou les résistances de chauffe de chaque chauffe-eau 6a, 6b ;
- le système de prétraitement T0 ;
- le système de posttraitement T1 ;
- le / les générateurs d'ultraviolets T10, T21 ;
- un des moyens de neutralisation du pH ;
- éventuellement un doseur volumétrique de chlore (dans le cas où ce doseur serait commandé électriquement) ;
- certains au moins des constituants de la station de traitement 70 comme le moteur du compresseur 74 et/ou l'appareillage de mesure 71 et ses sondes,
- le ou les systèmes de ventilation mécanique contrôlée / extracteur(s), l'éclairage, le chauffage pour maintenir l'installation hors gel et le confort des utilisateurs, la climatisation pour maintenir l'installation à température acceptable, les éventuels digicodes d'accès ;
- le dispositif de chauffage des effluents F0.

Enfin, le dispositif sanitaire selon l'invention pourrait comporter une pluralité de systèmes de recyclages identiques entre eux ou non, reliés à la sortie de chaque au moins une cuvette pour recevoir lesdits effluents provenant chaque au moins une cuvette.

Cette pluralité de systèmes de recyclage peut par exemple être relié à un réseau de transport des effluents pour ainsi répartir ces effluents entre les différents systèmes de recyclage. On peut ainsi augmenter la capacité de traitement d'effluent et/ou prévoir que ces systèmes de recyclage fonctionnent à tour de rôle en fonction des volumes à traiter et, si nécessaire en fonction de l'état de chaque système de recyclage.

De manière similaire, chaque système de recyclage de la pluralité de systèmes est également relié à l'entrée d'alimentation en eau de chaque au moins une cuvette augmentant ainsi la capacité et la disponibilité de la distribution d'eau vers les cuvettes et, si possible vers les robinets de l'installation.

## Revendications

1. Dispositif sanitaire (0), comprenant au moins une cuvette de toilette (1a, 1b) qui comporte une entrée d'alimentation en eau (2a) et une sortie d'effluents (3a, 3b), lesdits effluents contenant de l'eau et des matières organiques, **caractérisé en ce que** le dispositif sanitaire (0) comporte un système de recyclage des effluents (10) :
- relié d'une part à la sortie (3a, 3b) de chaque au moins une cuvette (1a, 1b) pour recevoir lesdits effluents (F0) provenant chaque au moins une cuvette (1a, 1b) ; et
- relié d'autre part à l'entrée d'alimentation en eau (2a) de chaque au moins une cuvette (1a, 1b) pour délivrer de l'eau à chaque au moins une cuvette, le système de recyclage (10) étant agencé pour traiter les effluents provenant de ladite au moins une cuvette (1a, 1b) de manière à générer un flux d'eau extraite (F2) desdits effluents et un flux de matières organiques (F1) extraites des effluents (F0), le système de recyclage (10) comprenant au moins un réservoir de stockage (R1) dudit flux de matières organiques (F1) et le système de recyclage (10) étant agencé de manière que l'eau délivrée à chaque au moins une cuvette (1a, 1b) soit au moins en partie de l'eau du flux d'eau extraite (F2) desdits effluents (F0).

2. Dispositif sanitaire (0) selon la revendication 1, dans lequel le système de recyclage (10) comporte un évaporateur (EV) agencé pour évacuer, sous forme de vapeur d'eau, de l'eau provenant des effluents (F0).

3. Dispositif sanitaire selon la revendication 2, dans lequel l'évaporateur (EV) est alimenté électriquement pour permettre la transformation d'eau en vapeur et l'évacuation de vapeur produite via une cheminée d'évacuation de vapeur.

4. Dispositif sanitaire (0) selon la revendication 3, comportant un système de prétraitement (T0) reliant fluidiquement un conduit de transport d'effluents à l'évaporateur (EV), le système de prétraitement (T0) étant agencé pour prélever et traiter de l'eau provenant des effluents et l'apporter à l'évaporateur (EV), le système de prétraitement (T0) comportant l'un au moins parmi :
- des moyens de neutralisation du pH de l'eau passant par le système de prétraitement (T0) ;
- un générateur d'ultraviolet pour dégrader des bactéries contenue dans l'eau passant par le système de prétraitement (T0) ;
- un ou plusieurs filtres de seuil de filtration inférieur ou égal à 25um, préférentiellement inférieur à 0,1µm.

5. Dispositif sanitaire selon l'une quelconque des revendication 2 à 4, dans lequel l'évaporateur (EV) est doté d'une sortie d'effluents gazeux (Evx) générés par l'évaporateur (EV) et contenant ladite vapeur d'eau, cette sortie d'effluents gazeux (EVx) étant équipée d'un filtre à charbon actif.

6. Dispositif sanitaire selon l'une quelconque des revendications 1 à 5, comprenant au moins des première et deuxième enceintes (21, 22) séparées l'une de l'autre, une partie au moins dudit système de recyclage (10) étant placée dans la première enceinte (21) et ladite au moins une cuvette, nommée première cuvette, étant placée dans la deuxième enceinte (22).

7. Dispositif sanitaire selon la revendication 6, comprenant au moins une troisième enceinte (23) séparée desdites première et deuxième enceintes (21, 22), le dispositif sanitaire comportant une deuxième cuvette (1b) placée dans la troisième enceinte (23), ladite deuxième cuvette (1b) comportant sa propre entrée d'alimentation en eau (2b) et sa propre une sortie d'effluents (3b), le système de recyclage des effluents (10) étant :
- relié à la sortie d'effluents (3b) de la deuxième cuvette (1b) pour recevoir des effluents provenant de la deuxième cuvette (1b) ; et
- relié à l'entrée d'alimentation en eau (2b) de ladite deuxième cuvette (1b) pour délivrer de l'eau à la deuxième cuvette (par l'intermédiaire d'un deuxième mécanisme de chasse d'eau propre à la deuxième cuvette), le système de recyclage (10) étant également agencé pour traiter les effluents provenant de ladite deuxième cuvette (1b) de manière à générer une partie du flux d'eau extraite (F2) desdits effluents (F0) et une partie du flux de matières organiques extraites (F1) des effluents (F0) à partir d'effluents provenant de la deuxième cuvette (1b) et le système de recyclage (10) étant agencé de manière que l'eau délivrée à la deuxième cuvette (1b) soit au moins en partie de l'eau extraite des effluents provenant de l'une quelconque des sorties d'effluents (3a, 3b) des première ou deuxième cuvettes (1a, 1b).

8. Dispositif sanitaire selon la revendication 7, dans lequel les deuxième et troisième enceintes (22, 23) sont des pièces distinctes d'un même deuxième conteneur (42) doté d'une toiture et de murs, ladite deuxième enceinte (23) étant équipée d'une porte d'accès à la deuxième enceinte (22) et ladite troisième enceinte (23) étant équipée d'une porte d'accès à la troisième enceinte (23).

9. Dispositif sanitaire selon la revendication 8, dans lequel la première enceinte (21) est une pièce d'un premier conteneur distinct dudit deuxième conteneur, ledit premier conteneur (41) comportant une toiture et des murs, la première enceinte (21) étant équipée d'une porte d'accès à la première enceinte.

10. Dispositif sanitaire selon l'une quelconque des revendications 1 à 9, comportant un premier robinet (4a) placé au-dessus d'un premier lavabo (5a) de sorte que de l'eau délivrée par le premier robinet (4a) soit collectée par le premier lavabo (5a) et soit mélangée aux effluents collectés par ladite au moins une cuvette (1a).

11. Dispositif sanitaire selon la revendication 10, comportant une réserve d'eau indépendante du système de recyclage, la réserve indépendante (Rx) étant reliée au premier robinet de sorte que l'eau apportée au premier robinet (4a) soit passée par la réserve d'eau indépendante (Rx) sans jamais passer par le système de recyclage (10).

12. Dispositif sanitaire selon la revendication 10, dans lequel ledit robinet (4a) est alimenté en eau recyclée par le système de recyclage (10), une première électrovanne (M0) normalement fermée étant disposée entre le système de recyclage (10) et ledit robinet (4a) pour sélectivement autoriser le passage d'eau du système de recyclage (10) vers le premier robinet (4a).

13. Dispositif sanitaire selon la revendication 12, dans lequel ladite première électrovanne (M0) autorise le passage d'eau vers le premier robinet (4a) en réponse à un signal de commande d'ouverture généré par un module de commande (UC), le module de commande (UC) étant relié à une sonde de mesure de turbidité (S1) de l'eau du flux d'eau extraite (F2) desdits effluents (F0), le module de commande étant agencé pour interdire la génération dudit signal de commande d'ouverture à l'attention de la première électrovanne (M0) lorsque la mesure de turbidité est représentative d'un niveau de turbidité de l'eau supérieur à un seuil prédéterminé de turbidité.

14. Dispositif sanitaire selon l'une quelconque des revendications 10 à 13, comportant au moins un chauffe-eau (6a) disposé pour chauffer l'eau apportée au premier robinet (4a), ledit au moins un chauffe-eau (6a) étant agencé pour chauffer l'eau à partir de l'une au moins des énergies thermiques comprises parmi une énergie thermique générée par une résistance électrique de chauffe, une énergie thermique générée par une combustion de gaz inflammable comme du méthane, du butane ou du propane, une énergie thermique générée par un capteur solaire à fluide caloporteur.

15. Dispositif sanitaire selon l'une quelconque des revendications 1 à 14, dans lequel ladite entrée d'alimentation en eau (2a) de ladite au moins une cuvette (1a) est reliée au système de recyclage (10) par l'intermédiaire d'une seconde électrovanne (M1) agencée pour sélectivement autoriser le passage d'eau du système de recyclage (10) vers l'entrée d'alimentation en eau (2a) de ladite au moins une cuvette (1a).

16. Dispositif sanitaire selon l'une quelconque des revendications 1 à 15, dans lequel le système de recyclage (10) comporte :
- un module de sécurité (UCx) ;
- une station de traitement des effluents (70) équipée d'un appareillage de mesure (71) de paramètres de fonctionnement de la station de traitement (70), lesdits paramètres de fonctionnement évoluant lors du fonctionnement de la station de traitement (70), l'appareillage de mesure (71) comportant au moins une sonde (72, 73) choisie dans le groupe de sondes comprenant une sonde de mesure de pression (73), une sonde de mesure de température, une sonde de mesure de consommation électrique, une sonde de niveau d'effluent ou d'eau, une sonde de pH, une sonde de turbidité (72), une sonde de mesure de température, une sonde de mesure de conductivité, une sonde de mesure d'intensité électrique, une sonde de mesure de tension électrique ;
l'appareillage de mesure (71) étant agencé pour générer au moins un signal d'état (Sx) de fonctionnement de la station (70) ;
ledit module de sécurité (Ucx) étant agencé pour sélectivement commander ou interdire l'alimentation en eau de l'entrée d'alimentation en eau (2a) de chaque au moins une cuvette (1a, 1b) en fonction du signal d'état (Sx) de fonctionnement de la station (70) et/ou d'un signal d'état de sondes du dispositif sanitaire.

17. Dispositif sanitaire selon l'une quelconque des revendications 1 à 15, comportant une station de traitement des effluents (70), la station de traitement des effluents (70) comportant :
- une première cuve (76a), dite cuve de décantation, reliée fluidiquement à la sortie (3a, 3b) de chaque au moins une cuvette (1a, 1b) pour recevoir les effluents (F0) provenant de chaque au moins une cuvette (1a, 1b) ;
- une deuxième cuve (76b) reliée à la première cuve (76a) par l'intermédiaire d'une première conduite de la station (70) disposée à une hauteur de trop plein de la première cuve (76a) ;
- une troisième cuve (76c), dite cuve de clarification, reliée à la deuxième cuve (76b) par l'intermédiaire d'une deuxième conduite de la station disposée à une hauteur de trop plein de la deuxième cuve (76b), une conduite d'évacuation de la station (70x) s'étendant entre la troisième cuve (76c) et une quatrième cuve (R0), dite cuve tampon, la conduite d'évacuation (70x) étant disposée à une hauteur de trop plein de la troisième cuve (76c) pour collecter ledit flux d'eau (F2) dans la troisième cuve (76c) et le transporter vers la quatrième cuve (R0).

18. Dispositif sanitaire selon la revendication 17, comportant une conduite de collecte de méthane (8) généré dans l'une au moins desdites cuves de la station de traitement (70) et un équipement de chauffe (6a) agencé pour générer de la chaleur à partir dudit méthane collecté via la conduite de collecte.

19. Dispositif sanitaire (0) selon l'une quelconque des revendications 1 à 18, dans lequel le système de recyclage (10) comporte une pompe de circulation (P) adaptée à forcer une circulation d'eau du flux d'eau extraite (F2) desdits effluents vers l'entrée d'alimentation en eau (2a) de chaque au moins une cuvette (1a, 1b).

20. Dispositif sanitaire selon l'une quelconque des revendications 1 à 19, dans lequel le système de recyclage (10) comporte un système de posttraitement (T1) disposé pour traiter le flux d'eau extraite (F2) desdits effluents (F0) et circulant vers l'entrée d'alimentation en eau (2a) de chaque au moins une cuvette (1a, 1b), le système de posttraitement (T1) comportant l'un au moins parmi :
- des moyens de neutralisation du pH de l'eau passant par le système de posttraitement ;
- un générateur d'ultraviolet (T10) pour dégrader des bactéries contenue dans l'eau passant par le système de posttraitement (T1) ;
- un ou plusieurs filtres (T11) de seuil de filtration inférieur ou égal à 25um, préférentiellement inférieur à 0,1µm ;
- un ou plusieurs filtres à charbon actif ;
- un doseur volumétrique de chlore pour diluer du chlore dans l'eau passant par le système de posttraitement (T1) avec une concentration de chlore contrôlée entre des seuils minimum et maximum de concentration prédéterminés.

21. Dispositif sanitaire selon l'une quelconque des revendications 1 à 20, comportant au moins une pompe de broyage (B1) agencée pour forcer le déplacement des effluents (F0) provenant de ladite au moins une cuvette (1a) vers le système de recyclage et pour broyer des éventuels agglomérats de matière organique contenus dans les effluents passant par la pompe de broyage (B1).

22. Dispositif sanitaire (0) selon l'une quelconque des revendications 1 à 20, comportant un dispositif de chauffage des effluents (F0).
